# EUROPEAN PATENT APPLICATION

(11) **EP 3 499 399 A1**
(43) Date of publication of application: **19.06.2019**
(21) Application number: 16924146.0
(22) Date of filing: 15.12.2016
(51) Int. Cl.: G06K 7/00

(54) **ELECTRONIC APPARATUS AND INFORMATION READING CONTROL METHOD**

(71) Applicant: Shenzhen Royole Technologies Co., Ltd., Shenzhen, Guangdong 518052 (CN)
(72) Inventor: ZHONG, Zhaoyu, Shenzhen Guangdong 518052 (CN); NIU, Jiaming, Shenzhen Guangdong 518052 (CN); ZHANG, Hao, Shenzhen Guangdong 518052 (CN)
(74) Representative: Mewburn Ellis LLP
(86) International application number: PCT/CN2016/110076
(87) International publication number: WO 2018/107422

(57) **Abstract**

A method for controlling information reading is applicable to an electronic apparatus. The method includes sending an acquisition request to an electronic device having an information code to be read and connected to the electronic apparatus, to trigger the electronic device to intercept a current display image of the electronic device to acquire a target image (S501); acquiring the target image from the electronic device (S502); displaying the acquired target image on a display screen of the electronic apparatus (S503); and identifying the information code in the acquired target image in response to an information code identification operation (S504). The present application also discloses the electronic apparatus. The electronic apparatus and the method for controlling information reading are capable of acquiring the information code of the electronic device and sending to the electronic apparatus to be conveniently identified when the information code is inconveniently scanned and identified.

## Description

### TECHNICAL FIELD

The present disclosure relates to an apparatus, and more particularly relates to an electronic apparatus and a method for controlling information reading.

### BACKGROUND

At present, information codes such as two-dimensional codes have been widely used as an information carrier. For example, a webpage link, a personal business card, a software interface (such as a payment interface) and the like may be displayed in the form of the two-dimensional code. Scanning the two-dimensional code may jump to the corresponding webpage, enter the corresponding software interface, or obtain the personal business cards or the like. At present, the two-dimensional code on a device may be scanned and read by other devices with a two-dimensional code scanning function. For example, the two-dimensional code displayed on a computer may be scanned and read by turning on the scanning function of a mobile phone. However, for a device such as a head-mounted display device with a small display screen and/or a curved screen, the displayed two-dimensional code is often not well scanned by other devices.

### SUMMARY

Embodiments of the present disclosure provide an electronic apparatus and a method for controlling information reading which may conveniently read information codes such as a two-dimensional code on a device with a small display screen and/or a curved display screen.

An embodiment of the present disclosure provides an electronic apparatus. The electronic apparatus includes a communication unit, a display screen, and a processor. The communication unit is operated to establish a communication connection with an electronic device with an information code to be read. The processor includes a request sending module, an image receiving module, an image display module, and an identification module. The request sending module is operated to send an acquisition request to the electronic device to trigger the electronic device to intercept a current display image of the electronic device to acquire a target image and the current display image includes the information code. The target image includes the intercepted display image having the information code. The image receiving module is operated to acquire the target image from the electronic device. The image display module is operated to display the acquired target image on the display screen of the electronic apparatus. The identification module is operated to identify the information code in the acquired target image in response to an information code identification operation.

An embodiment of the present disclosure provides a method for controlling information reading is applicable to an electronic apparatus. The electronic apparatus includes a communication unit. The method includes sending an acquisition request to an electronic device with an information code to be read and connected to the communication unit, to trigger the electronic device to intercept a current display image of the electronic device to acquire a target image, wherein the display image displaying the information code, and the target image including the intercepted display image having the information code; acquiring the target image from the electronic device; displaying the acquired target image on a display screen of the electronic apparatus; and identifying the information in the acquired target image in response to an information code identification operation.

The electronic apparatus and the method for controlling information reading of the present disclosure, through communicating with an electronic device that is inconvenient for scanning the information code, trigger the electronic device to intercept the current display image having the information code, and then acquires the display image and conveniently identify the information code on the electronic apparatus.

### BRIEF DESCRIPTION OF THE DRAWINGS

To better illustrate the technical solutions of embodiments of the present disclosure, the following descriptions will briefly illustrate the accompanying drawings described in the embodiments. Obviously, the following described accompanying drawings are merely some embodiments of the present disclosure. Those skilled in the art may obtain other accompanying drawings according to the described accompanying drawings without creative efforts.
FIG. 1 is a structural block diagram of an electronic apparatus according to an embodiment of the present disclosure.
FIG. 2 is a schematic diagram of inputting an information code reading operation according to an embodiment of the present disclosure.
FIG. 3 is a schematic diagram of a target image including a number of information codes according to an embodiment of the present disclosure.
FIG. 4 is a schematic diagram of a display interface when an electronic apparatus is incapable of identifying a current information code according to an embodiment of the present disclosure.
FIG. 5 is a flowchart of a method for controlling information reading according to an embodiment of the present disclosure.
FIG. 6 is a sub-flowchart of operations at block S504 in FIG. 5.

### DETAILED DESCRIPTION OF ILLUSTRATED EMBODIMENTS

The technical solutions of embodiments of the present disclosure will be described clearly and completely in combination with the accompanying drawings of the embodiments of the present disclosure. Obviously, the described embodiments are merely a part of embodiments of the present disclosure, but not all of the embodiments. All other embodiments obtained by those skilled in the art without creative efforts based on the embodiments of the present disclosure shall fall within the protection scope of the present disclosure.

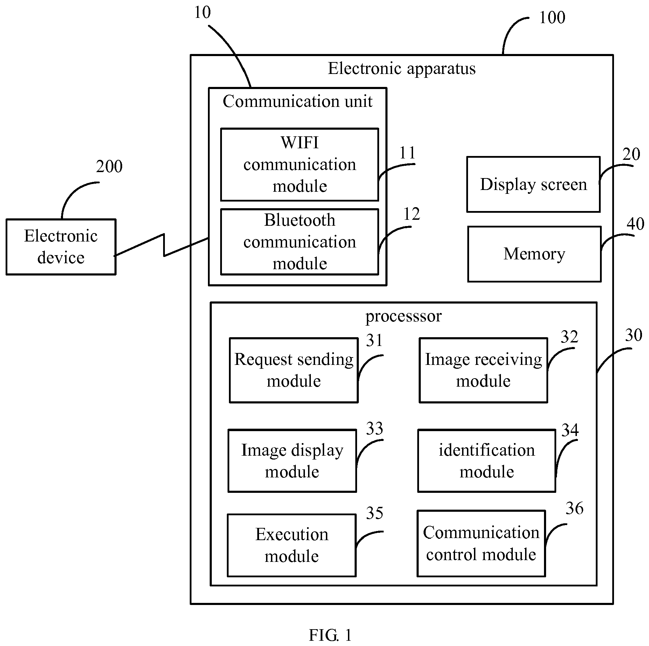

FIG. 1 illustrates a schematic block diagram of an electronic apparatus according to an embodiment of the present disclosure. The electronic apparatus 100 includes a communication unit 10, a display screen 20, and a processor 30.

The communication unit 10 is operated to establish a communication connection with an electronic device 200. The electronic apparatus 100 is operated to read and identify an information code to be read in the electronic device 200. In the embodiment, the information code may be a two-dimensional code, a barcode, or the like. The information in the information code may include, but is not limited to, one of a webpage link, a personal identity card, a software interface (i.e., a payment interface), and the like. The processor 30 includes a request sending module 31, an image receiving module 32, an image display module 33, and an identification module 34.

The request sending module 31 is operated to send an acquisition request to the electronic device 200 to trigger the electronic device 200 to intercept the display image currently displayed by the electronic device 200 to acquire a target image IM1. The target image IM1 includes the intercepted target image. In some embodiments, the target image IM1 is a screenshot image acquired by intercepting the display image.

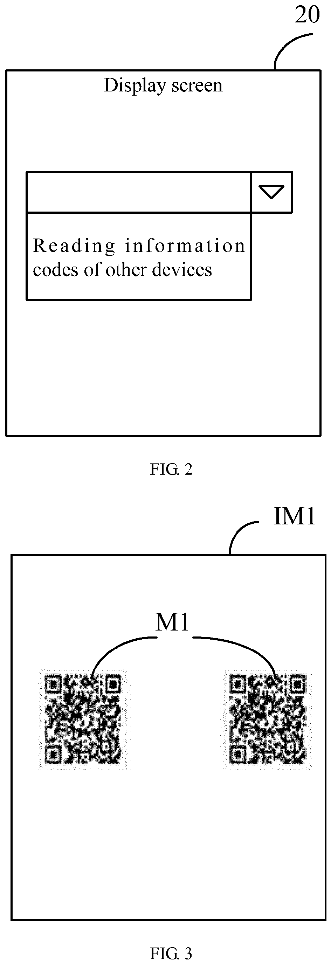

As illustrated in FIG. 2, in some embodiments, after the electronic apparatus 100 establishes the communication connection with the electronic device 200, the request sending module 31 sends the acquisition request to the electronic device 200 in response to an information code reading operation.

In some scenarios, when the information code of the electronic device 200 is inconvenient to be read, the electronic apparatus 100 may trigger the request sending module 31 to send the acquisition request by inputting the information code reading operation by the electronic apparatus 100. As illustrated in FIG. 2, the information code reading operation may be an operation of the user selecting "read information code of other devices" through a menu option on the electronic apparatus 100. In other embodiments, the display screen 20 may be a touch display screen, and the information code reading operation may be a specific touch gesture input on the display screen 20. For example, after the electronic apparatus is established the communication connection with the electronic device 200, an "O" shaped touch gesture maybe input on the display screen 20 to trigger the request sending module 31 to send the acquisition request.

In some embodiments, the electronic device 200 is an electronic device having a function of screenshot. The acquisition request includes a screenshot instruction. The screenshot instruction is the same as an instruction generated by clicking a screenshot icon or a screenshot option of the electronic device 200. Therefore, after receiving the acquisition request, the electronic device 200 is triggered to perform a screenshot operation to intercept the currently displayed display image.

The image receiving module 32 is operated to acquire the target image IM1 from the electronic device 200. In some embodiments, after the electronic device 200 captures the current display image thereon to acquire the target image IM1, the image receiving module 32 accesses the electronic device 200 and acquires the target image IM1 through the communication unit 10. In other embodiments, the acquisition request further includes a data sending instruction. The data sending instruction is operated to trigger the electronic device 200 to actively send the target image IM1 to the electronic apparatus 100 communicating therewith after intercepting the display image to acquire the target image IM1. The image receiving module 32 receives the target image IM1 sent by the electronic device 200 through the communication unit 10 to acquire the target image IM1.

In some scenarios, before inputting the information code reading operation, the user may operate the electronic device 200 to control the electronic device 200 to display the information code to be identified. However, the user may forget to control the electronic device 200 to display the information code to be identified.

Therefore, in some embodiments, after receiving the acquisition request to intercept the current display image to acquire the target image IM1, the electronic device 200 further determines whether the target image IM1 includes the information code and generates a feedback information of whether there is the information code to be sent to the electronic apparatus 100. The image receiving module 32 further receives the feedback information sent by the electronic device 200, and acquires the target image IM1 from the electronic device 200 when the information code in the target image IM1 is determined according to the feedback information. Obviously, when determining that there is no information code in the target image IM1 according to the feedback information, the image receiving module 32 may not acquire the target image IM1, and may control the display screen 20 to display the prompt information to prompt the user. The prompt information is used to prompt the user that the electronic device 200 does not display the information code. For example, the prompt information may be "the other party does not display the information code". Alternatively, the prompt information may also be "the other party does not display the information code, whether to continue". The image receiving module 32 continues to acquire the target image IM1 from the electronic device 200 in response to the user selecting "Yes". The image receiving module 32 does not acquire the target image IM1 from the electronic device 200 when the user selects "No". Therefore, when the information code is not in the target image IM1, the subsequent operation maybe stopped, acquiring the target image IM1 without the information code is avoided, wasting the storage space is avoided, and the computing resources of the processor 30 are saved.

After seeing the prompt information of "the other party does not display the information code" on the display screen 20, the user may operate the electronic device 200 to control the electronic device 200 to display a display image with an information code to be read. Then, the user may re-enter the information code reading operation through the electronic apparatus 100, and repeat the aforementioned operations.

The image display module 33 is operated to display the acquired target image IM1 on the display screen 20 of the electronic apparatus 100. The display image intercepted by the electronic device 200 includes the information code. Therefore, the target image IM1 as a screenshot image by intercepting the display image necessarily includes the information code.

The identification module 34 is operated to identify the information code in the acquired target image IM1 in response to the information code identification operation. Therefore, in the present disclosure, when the information code in the electronic device 200 needs to be scanned and the information code displayed by the electronic device 200 cannot be directly scanned by the third party device, the electronic device 200 establishes communication connection with the electronic apparatus 100 capable of easily reading the information code and triggers the electronic device 200 to perform a screenshot operation to acquire the target image IM1 with the information code. Then, the electronic apparatus 100 may acquire the target image IM1 to be displayed on the display screen 20 of the electronic apparatus 100, thereby conveniently identifying the information code on the electronic apparatus 100.

Referring to FIG. 3, in some embodiments, when the target image IM1 includes a plurality of information codes M1, the identification module 34 further determines a corresponding information code M1 according to the area executed by the information code identification operation to identify the information in the corresponding information code M1.

In the embodiment, the display screen 20 is a touch display screen. The information code identification operation may be an operation of long pressing the position of the information code M1 in the target image IM1 for more than a preset time (for example, 3 seconds).

As illustrated in FIG. 1, the processor 30 further includes an execution module 35. The execution module 35 is operated to acquire the information in the information code identified by the identification module 34 after the identification module 34 identifies the information code, and to control to perform an operation corresponding to the identified information. For example, when the information in the information code is a webpage link, the execution module 35 controls to open the webpage link. When the information in the information code is a personal identification business card, the execution module 35 may control the display screen 20 to display an interface including friend addition, contact storage, and the like. When the information in the information code is a software interface, the execution module 35 may control the display screen 20 to display the software interface.

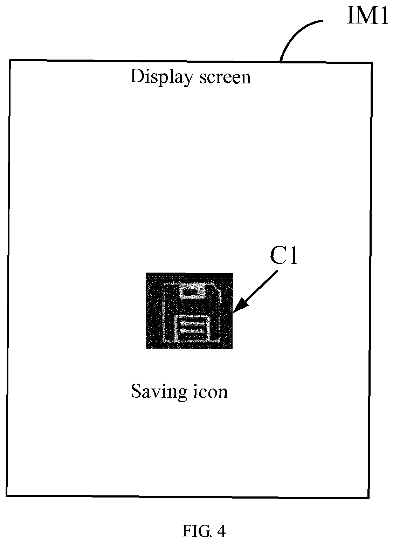

Please also referring to FIG. 4, in some embodiments, the identification module 34 identifies the information code in the acquired target image IM1 in response to the information code identifying operation, which includes the following operations. The identification module 34 determines whether the acquired target image IM1 is identifiable. If yes, the information code in the acquired target image IM1 is identified. If not, that is, the identification module 34 is incapable of identifying the information code M1 in the target image IM1, the display screen 20 is controlled to display an image saving icon C1. The electronic apparatus 100 further includes a memory 40. The execution module 35 is further operated to store the target image IM1 including the unidentifiable information code M1 in the memory 40 in response to the operation of the image saving icon C1. For example, the target image IM1 is stored in a phone album folder in the memory 40. The operation of the image saving icon C1 may be an operation of clicking the image saving icon C1.

For example, when the information code M1 needs to be scanned for identification by a specific third party software, the information code M1 may be stored in the electronic apparatus 100 when the electronic apparatus 100 is incapable of identifying the information code M1. After the third party software is installed in the electronic apparatus 100, the stored target image IM1 is retrieved, scanned, and identified by the third-party software. Alternatively, in some embodiments, the target image IM1 stored in the memory 40 may also be displayed on the display screen 20, and then the displayed target image IM1 may be scanned and identified by another electronic device that has installed third-party software.

As illustrated in FIG. 1, the processor 30 further includes a communication control module 36. The communication control module 36 is operated to control the communication unit 10 to establish a communication connection with the electronic device 200.

In some embodiments, the communication unit 10 includes a WIFI communication module 11. The electronic device 200 is connected to a WIFI local area network, and the socket service is opened (the electronic device 200 is set as a server), and a specific port is bound. In one embodiment, the communication control module 36 controlling the communication unit 10 to establish the communication connection with the electronic device 200 includes the following operations. The communication control module 36 controls the communication unit 10 of the electronic apparatus 100 to connect to the WIFI local area network. The WIFI local area network is a local area network to which the electronic device 200 is connected. The communication control module 36 searches for the electronic device 200 to which the electronic apparatus 100 is currently connected on the WIFI local area network. For example, a broadcast data packet is sent to the WIFI local area network. After receiving the data packet returned by the electronic device 200, the communication control module 36 acquires an IP address and a port of the electronic device 200, and controls the communication unit 10 to establish the communication connection with the electronic device 200 according to the IP address and the port of the electronic device 200. Controlling the communication unit 10 to establish the communication connection with the electronic device 200 may be performed by the communication control module 36 in response to a turning on operation.

The request sending module 31 may send the acquisition request through the TCP protocol. The image receiving module 32 may also receive the target image IM1 sent by the electronic device 200 through the TCP protocol through the communication unit 10.

As illustrated in FIG. 1, the communication unit 10 may further include a Bluetooth communication module 12. In other embodiments, the communication control module 36 controlling the communication unit 10 to establish the communication connection with the electronic device 200 includes the following operations. In response to the turning on operation, the communication control module 36 searches for the Bluetooth-enabled electronic device 200 nearby in response to the turning on operation. When the electronic device 200 is found, the communication control module 36 transmits a Bluetooth pairing request. When the pairing request is passed, the communication control module 36 establishes the communication connection with the electronic device 200.

The turning on operation may be input when the user needs to scan and identify the information code of the electronic device 200.

In some embodiments, the request sending module 31, the image receiving module 32, the image display module 33, the identification module 34, the execution module 35, and the communication control module 36 may be program modules installed in a specific application software in the electronic apparatus 100. After the specific application software is opened, the request sending module 31, the image receiving module 32, the image display module 33, the recognition module 34, the execution module 35, and the communication control module 36 may be triggered to perform the aforementioned functions in response to the user's operation. The turning on operation may also be an operation of turning on the specific application software. The information code reading operation may further be a click operation on a specific menu option in the specific application software or a specific touch gesture on an interface of the specific application software.

In other embodiments, the request sending module 31, the image receiving module 32, the image display module 33, the identification module 34, the execution module 35, and the communication control module 36 may be program instructions stored in the memory 40 to be invoked and executed by the processor 30 or the firmware solidified in the processor 30. In some embodiments, the request sending module 31, the image receiving module 32, the image display module 33, the identification module 34, the execution module 35, and the communication control module 36 may also be hardware circuits in the processor 30. The information code reading operation may be a click operation on a particular menu option in the electronic apparatus 100 or a specific touch gesture performed on any display interface in the electronic apparatus 100.

The processor 30 may be a processing chip, such as a central processing unit, a microcontroller, a microprocessor, a single chip microcomputer, or a digital signal processor.

The electronic apparatus 100 may be a portable electronic device, such as a mobile phone or a tablet computer. The electronic device 200 may be a head mounted display, such as a smart glasses or a smart helmet.

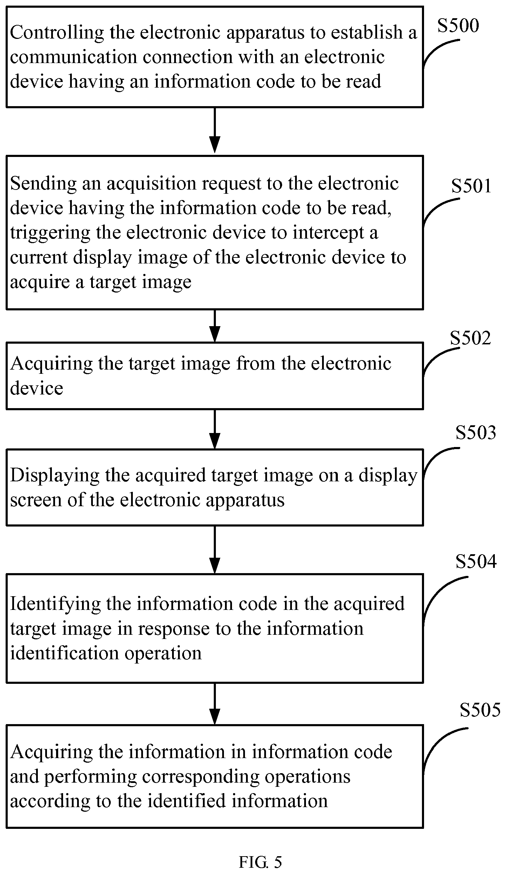

FIG. 5 illustrates a flowchart of a method for controlling information reading according to an embodiment of the present disclosure. The method is applicable to the aforementioned electronic apparatus 100. The method includes the operations at the following blocks.

At block S501, the request sending module 31 sends an acquisition request to the electronic device 200 having an information code to be read, and triggers the electronic device 200 to intercept the current display image of the electronic device 200 to acquire the target image IM1. In some embodiments, operations at block S501 are as follows. After the electronic apparatus 100 establishes the communication connection with the electronic device 200, the request sending module 31 sends the acquisition request to the electronic device 200 in response to an information code reading operation to trigger the electronic device 200 to intercept the current display image of the electronic device 200 to acquire the target image IM1. Therein, the information code reading operation may be an operation of the user selecting a specific menu option or inputting a specific touch gesture on the display screen 20. In some embodiments, the acquisition request includes a screenshot instruction. The triggering the electronic device 200 to intercept the current display image of the electronic device 200 to acquire the target image IM1 includes triggering the electronic device 200 to perform a screenshot operation by the acquisition request to intercept the display image currently displayed by the electronic device 200.

At block S502, the image receiving module 32 acquires the target image IM1 from the electronic device 200. Specifically, the image receiving module 32 actively accesses the electronic device 200 to acquire the target image IM1, or the image receiving module 32 acquires the target image IM1 by receiving the target image IM1 sent by the electronic device 200. In some embodiments, the image receiving module 32 further receives a feedback information sent by the electronic device 200. The feedback information includes the information whether the target image IM1 has an information code. When the information code in the target image IM1 is determined according to the feedback information, the image receiving module 32 acquires the target image IM1 from the electronic device 200.

At block S503, the image display module 33 displays the acquired target image IM1 on the display screen 20 of the electronic apparatus 100.

At block S504, the identification module 34 identifies the information code in the acquired target image IM1 in response to the information code identification operation. In some embodiments, when the target image IM1 includes a number of information codes M1, the identification module 34 determines a corresponding information code M1 according to an area executed by the information code identification operation, and identifies the information of the corresponding information code M1. The information code identification operation may be an operation of long pressing the position of the information code M1 in the target image IM1 for more than a preset time (for example, 3 seconds).

At block S505, the execution module 35 is operated to acquire the information in the information code identified by the identification module 34 and perform a corresponding operation according to the identified information after the identification module 34 identifies the information code. Therein, the information code includes a two-dimensional code, a barcode, and the like. The information in the information code may include, but is not limited to, a webpage link, a personal identity business card, or a software interface (i.e. a payment interface), etc. The execution module 35 performing the corresponding operation according to the identified information includes the following operations. When the information in the information code is a webpage link, the execution module 35 controls to open the webpage link. When the information in the information code is a personal identification business card, the execution module 35 may control the display screen 20 to display an interface including a friend addition, a contact storage, and the like. When the information in the information code is a software interface, the execution module 35 controls the display screen 20 to display the software interface.

As illustrated in FIG. 5, the method for controlling information reading control further includes operations at block S500 before operations at block S501. At block S500, the communication control module 36 is operated to control the communication unit 10 to establish the communication connection with the electronic device 200.

In some embodiments, the communication unit 10 includes a WIFI communication module 11. At block S500, in response to a turning on operation, the communication control module 36 controls the communication unit 10 of the electronic apparatus 100 to connect to a WIFI local area network. The WIFI local area network is a local area network to which the electronic device 200 is connected to. The communication control module 36 searches for the electronic device 200 nearby to which the electronic apparatus 100 is currently connected on the WIFI local area network. For example, a broadcast data packet is sent to the WIFI local area network. After receiving the data packet returned by the electronic device 200, the communication control module 36 acquires the IP address and the port of the electronic device 200 according to the returned data packet. And the communication control module 36 controls the communication unit 10 to establish the communication connection with the electronic device 200 according to the IP address and the port of the electronic device 200.

In some embodiments, the communication unit 10 may further include a Bluetooth communication module 12. Operations at block S500 are as follows. The communication control module 36 searches for the Bluetooth enabled electronic device 200 in response to the turning on operation. When the electronic device 200 is found, a Bluetooth pairing request is sent. When the pairing request is passed, a communication connection with the electronic device 200 is established.

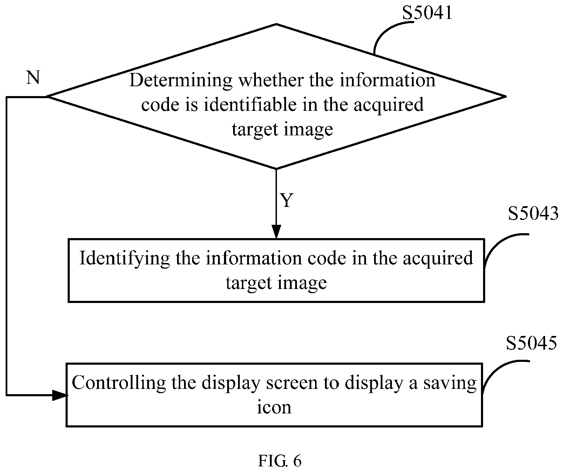

FIG. 6 illustrates a sub-flowchart of operations at block S504 in an embodiment. The operations at block S504 includes the operations at the following blocks.

At block S5041, the identification module 34 determines whether the information code in the acquired target image IM1 is identifiable.

At block S5043, if so, the information code in the acquired target image IM1 is identified.

At block S5045, if not, that is, when the identification module 34 cannot identify the information code M1 in the target image IM1, the display screen 20 is controlled to display an image saving icon C1.

In some embodiments, the method for controlling the information reading further includes the following operations. The execution module 35 further stores the target image IM1 including the unidentified information code M1 in the memory 40 in response to the operation of the image saving icon C1.

Therefore, the electronic apparatus 100 and the method for controlling information reading control method of the present disclosure may acquire a screenshot image of the current display image of the electronic device 200 through the electronic apparatus 100 when it is inconvenient to directly scan and identify the information code displayed by the electronic device 200 that hash a small window display or a curved display screen, and then scan and identify the screenshot image displayed by the electronic apparatus 100 on the electronic apparatus 100 or by a third party device.

The above described are illustrative embodiments of the present disclosure. It should be noted that those skilled in the art may make some modifications and improvements without departing from the principle of the present disclosure. Those modifications and improvements are also considered to be within the scope of the present disclosure.

## Claims

1. An electronic apparatus, comprising:
a communication unit operated to establish a communication connection with an electronic device having an information code to be read;
a display screen;
a processor comprising:
a request sending module operated to send an acquisition request to the electronic device to trigger the electronic device to intercept a current display image of the electronic device to acquire a target image, wherein the display image displays the information code and the target image comprises the intercepted display image having the information code;
an image receiving module operated to acquire the target image from the electronic device;
an image display module operated to display the acquired target image on a display screen of the electronic apparatus; and
an identification module operated to identify the information code in the acquired target image in response to an information code identification operation.

2. The electronic apparatus according to claim 1, wherein after the electronic apparatus established the communication connection with the electronic device, the request sending module sends the acquisition request to the electronic device in response to an information code reading operation and triggers the electronic device to intercept the current display image of the electronic device to acquire the target image, and the target image is a screenshot of the display image.

3. The electronic apparatus according to claim 2, wherein the acquisition request comprises a screenshot instruction, after the acquisition request is sent to the electronic device, the request sending module triggers the electronic device to perform a screenshot operation in response to the screenshot instruction in the acquisition request to acquire the target image by intercepting the current display image of the electronic device.

4. The electronic apparatus according to claim 1, wherein the image receiving module actively accesses the electronic device to acquire the target image, or the image receiving module acquires the target image by receiving the target image sent by the electronic device.

5. The electronic apparatus according to any one of claim 1 to claim 4, wherein the identification module identifying the information code in the acquired target image comprises: the identification module determining whether the information code in the acquired target image is identifiable, and
the identification module identifies the information code in the acquired target image when the information code in the acquired target image is identifiable.

6. The electronic apparatus according to claim 5, wherein the identification module controls the display screen to display an image saving icon when the information code in the acquired target image is unidentifiable.

7. The electronic apparatus according to claim 5, wherein the identification module is operated to identify the corresponding information code according to a region executed by the information code identification operation and identify the information in the corresponding information code when the target image comprises a plurality of information codes.

8. The electronic apparatus according to claim 7, wherein the information code identification operation is an operation of long pressing the position of the information code in the target image for more than a preset time.

9. The electronic apparatus according to claim 5, wherein the processor further comprises an execution module, after the identification module identifies the information code, the execution module is operated to acquire the information in the information code identified by the identification module and to perform a corresponding operation according to the identified information.

10. The electronic apparatus according to any one of claim 1 to claim 4, wherein the processor further comprises a communication control module, the communication control module is operated to control the communication unit to establish the communication connection with the electronic device.

11. The electronic apparatus according to claim 10, wherein the communication unit comprises a WIFI communication module, the communication control module is operated to control the electronic apparatus to connect to a WIFI local area network, the WIFI local area network is a local area network to which the electronic device is connected, the communication control module controls to send a broadcast data packet to the WIFI local area network to search for the electronic device in the current WIFI local area network, after receiving the data packet returned from the electronic device, the communication control module acquires an IP address and a port of the electronic device according to the broadcast data packet, and controls the communication unit to establish the communication connection with the electronic device according to the IP address and the port of the electronic device.

12. A method for controlling information reading that is applicable to an electronic apparatus comprising a communication unit, the method comprising:
sending an acquisition request to an electronic device connected to the communication unit and having an information code to be read, to trigger the electronic device to intercept a current display image of the electronic device to acquire a target image, the display image displaying the information code, and the target image comprising the intercepted display image displaying the information code;
acquiring the target image from the electronic device;
displaying the acquired target image on a display screen of the electronic apparatus; and
identifying the information code in the acquired target image in response to the information code identification operation.

13. The method according to claim 12, wherein the sending an acquisition request to an electronic device connected to the communication unit and having an information code to be read, to trigger the electronic device to intercept a current display image of the electronic device to acquire a target image, comprises:
sending the acquisition request to the electronic device in response to the information code reading operation and triggering the electronic device to intercept the current display image of the electronic device to acquire the target image after the electronic apparatus established a communication connection with the electronic device.

14. The method according to claim 13, wherein the acquisition request comprises a screenshot instruction, the triggering the electronic device to intercept the current display image of the electronic device to acquire the target image, comprises:
triggering the electronic device to perform a screenshot operation by the screenshot instruction in the acquisition request to intercept the display image currently displayed by the electronic device.

15. The method according to claim 12, wherein the acquiring the target image from the electronic device, comprises:
actively accessing the electronic device to acquire the target image, or acquiring the target image by receiving the target image sent by the electronic device.

16. The method according to any one of claim 12 to claim 15, wherein the identifying the information in the acquired target image in response to the information code identification operation, comprises:
determining whether the information code in the acquired target image is identifiable in response to the information code identification operation;
when the information code in the acquired target image is identifiable, the information code in the acquired target image is identified.

17. The method according to claim 16, wherein the identifying the information code in the acquired target image in response to the information code identification operation, further comprises:
when the information code in the acquired target image is unidentifiable, the display screen is controlled to display an image saving icon thereon.

18. The method according to claim 16, further comprising:
acquiring the information in the identified information code and performing a corresponding operation according to the identified information after the information code in the acquired target image is identified.

19. The method according to any one of claim 12 to claim 15, further comprising:
controlling the communication unit to establish the communication connection with the electronic device.

20. The method according to claim 19, wherein the communication unit comprises a WIFI communication module, the controlling the communication unit to establish the communication connection with the electronic device, comprises:
controlling the electronic apparatus to connect to a WIFI local area network, the WIFI local area network being a local area network to which the electronic device is connected to;
sending a broadcast data packet to the WIFI local area network to which the electronic apparatus is currently connected, to search for the electronic device in the current WIFI local area network;
acquiring an IP address and a port of the electronic device according to the data packet, after receiving the data packet returned from the electronic device; and
controlling the communication unit to establish the communication connection with the electronic device according to the IP address and the port of the electronic device.
